# EUROPEAN PATENT APPLICATION

(11) **EP 1 342 520 A1**
(43) Date of publication of application: **10.09.2003**
(21) Application number: 03380029.3
(22) Date of filing: 17.02.2003
(51) Int. Cl.: B23B 23/00

(54) **A tailstock with automatic control of position and force**

(30) Priority: 19.02.2002 ES 200200391
(71) Applicant: Danobat, S. Coop., 20870 Elgoibar (Guipuzkoa) (ES)
(72) Inventor: De Luis Vizcaino, Elias, 20870 Elgoibar (Gipuzkoa) (ES)

(57) **Abstract**

"A tailstock with automatic control of position and force which includes a base (1), a body (2) linked to said base (1), a movable spindle (3) with a centring point (7) for fixing a piece, a motor (5) moving the spindle (3), a rotary encoder (11) in said motor (5), a linear encoder (10) to determine the position of the spindle (3), a spring (8) housed in the spindle (3), and means to press the spring (8) when the centring point (7) is in contact with the piece, said tailstock being governed by a numeric control (12). The position of the spindle (3) is controlled by the rotary encoder (11) and by the linear encoder (10), and the pressure exerted by the centring point (7) against the piece is controlled by comparing the signal of the rotary encoder (11) with the signal of the linear encoder (10)."

## Description

### TECHNICAL FIELD

The present invention relates to machine tool tailstocks, and more specifically to tailstocks with automatic control of the position of the centring point and of the tightening force exercised by said centring point against the free end of the piece to be machined.

### BACKGROUND OF THE INVENTION

Tailstocks are known which include a movable spindle at the end of which the centring point for fixing the piece to be machined is located. Tailstocks are also known where adjustment of the position of the centring point and adjustment of the tightening force that the centring point exercises against the piece are controlled manually by the operator.

There are also tailstocks where control of the position and force is automatic. JP06055310 describes a tailstock and a method for the control of said tailstock. The tailstock is displaced longitudinally in relation to the piece to be machined by a motor governed by numeric control. When the tailstock contacts the end of the piece to be machined, the numeric control compares the real longitudinal position of the tailstock (obtained indirectly by a rotary encoder which detects the rotation of the motor) with the theoretical position it should be in. If the deviation is greater than a pre-established threshold value, a control signal is generated.

To control the tightening force of the tailstock against the piece, a correlation is established between the position measured in the rotary encoder and the tightening force exercised against the piece. So, once the tailstock is in contact with said piece, the numeric control operates the motor until the rotary encoder of said motor measures the deviation of position corresponding to the tightening force wanted against said piece. Therefore, said force is measured indirectly, making an estimate of it.

On the other hand, the body of the tailstock is rigid, which limits the precision of the force said tailstock exercises against the piece.

### DESCRIPTION OF THE INVENTION

The object of the invention is to provide a tailstock with automatic control of position and force, as defined in the claims.

The tailstock of the invention includes a body, a spindle which moves longitudinally in relation to said body and which has at its end a centring point for fixing a piece to be machined, a motor with a shaft whose rotation displaces the spindle, and a rotary encoder which detects the rotation of said shaft, said tailstock being governed by a numeric control.

The tailstock also includes a linear encoder which determines the position of the spindle, a pre-loaded spring housed longitudinally inside the spindle, and means for displacing the spindle until it comes up against the piece to be machined and for pressing said spring.

The use of said spring allows the precision of the tightening force the tailstock exercises against the piece to be greater than in the case of rigid tailstocks, since the spring constant K will be more stable than the constant K of a rigid system.

The method according to which the tailstock operates is as follows: the spindle is displaced until the centring point comes up against the piece to be machined. At that moment, the numeric control controls the position of the spindle not just by means of the signal received from the rotary encoder of the motor, but also by the signal received from the linear encoder attached to the spindle, so that there is a double control of the position.

Once the tailstock is in contact with the piece, the numeric control controls the tightening force of said tailstock against the piece, comparing the signal received from the rotary encoder of the motor with the signal received from the linear encoder attached to the spindle. As the constant K of the spring and the tightening force which must be exercised against the piece are known, it can be calculated how much more the motor shaft must turn in order to exercise said force.

The tailstock also includes a pressure sensor that determines the tightening force exercised by the spring. Therefore, the numeric control also knows the pressure exercised by the tailstock against the piece by means of the signal received from said pressure sensor, so that there is also a double control of force.

### DESCRIPTION OF THE DRAWINGS

FIG. 1 is an elevated cross-sectional view of one embodiment of the invention.
FIG. 2 is a side view according to section II-II of FIG. 1.

### DETAILED DESCRIPTION OF THE INVENTION

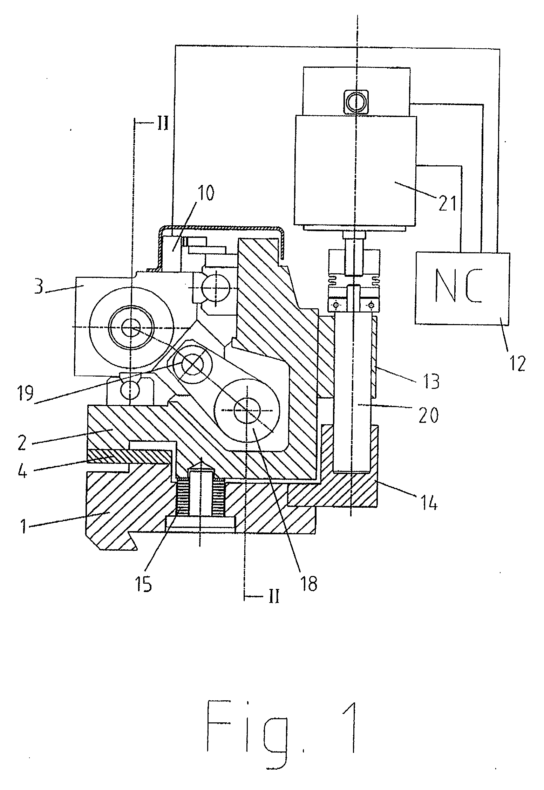

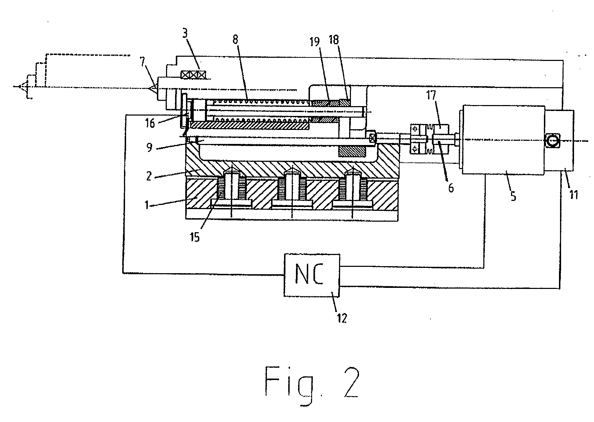

With reference to figures 1 and 2, the tailstock of the invention includes a base 1, a body 2 linked to said base 1, a spindle 3 which is displaced longitudinally with respect to said body 2 and which has at its end a centring point 7 for fixing a piece to be machined, a motor 5 with a shaft 6 whose rotation displaces the spindle 3, and a rotary encoder 11 which detects the rotation of said shaft 6. The tailstock is controlled by a numeric control 12.

The tailstock also has a linear encoder 10 which determines the position of the spindle 3, a pre-loaded spring 8 housed longitudinally inside the spindle 3, and means for displacing the spindle 3 until said spindle 3 comes up against the piece, and then presses said spring 8.

The means for displacing the spindle 3 include a nut 18 retained in rotation and twisted on a threaded shaft 9 connected to shaft 6 of the motor 5 by an elastic coupling 17, and a bushing 19 attached to said nut 18 and facing the spring 8. By the rotation of the shaft 6 of motor 5, the threaded shaft 9 also rotates, which causes the displacement of nut 18, since said nut 18 cannot rotate. The bushing 19 is displaced together with the nut 18, at the same time displacing the whole spindle 3 as long as said spindle does not meet any opposition to its forward movement. When the spindle 3 comes up against the piece to be machined, said spindle 3 is immobilised so that, if the threaded shaft 9 continues to rotate, bushing 19 compresses the spring 8.

The numeric control 12 controls the position of the spindle 3 when said spindle comes up against the piece by means of the signal received from the rotary encoder 11 and also by the signal received from the linear encoder 10. The numeric control 12 compares the real position of the spindle 3, obtained directly by means of the linear encoder 10 and indirectly by the rotary encoder 11, with the theoretical position it should be in according to the program loaded. If the deviation is greater than a pre-established threshold value, the process is stopped. On the other hand, if the position obtained by means of the linear encoder 10 and by the rotary encoder 11 are not the same, the process is also stopped, as an error has been produced.

The numeric control 12 controls the tightening force of the centring point 7 of the spindle 3 against the piece to be machined, comparing the signal received from the rotary encoder 11 with the signal received from the linear encoder 10 as the shaft 6 of motor 5 rotates. Dividing the tightening force that must be exercised against the piece by the constant K of spring 8, the numeric control 12 knows how much nut 18 must be moved forward in order to exercise that force. The numeric control 12 controls said forward movement by means of rotary encoder 11.

The tailstock also includes a pressure sensor 16 that determines the tightening force exercised by the spring 8, so that numeric control 12 also knows the pressure exercised by the centring point 7 against the piece by means of the signal received from said pressure sensor 16.

Thus, once nut 18 has advanced sufficiently as a function of constant K of the spring and the theoretical force which is to be exercised, the numeric control 12 calculates the deviation in the force exercised against the piece comparing the real force applied, measured by means of said pressure sensor 16, with the theoretical force which should be exercised.

If the deviation in the force applied is zero, the process of adjustment of the longitudinal position and the force is concluded. If the deviation in the force exercised is within a pre-established range, a complementary adjustment of the force exercised is carried out displacing nut 18 until the force measured by the pressure sensor 16 is equal to the theoretical force to be exercised. If the deviation in the force exercised is outside that pre-established range, an error signal is generated.

The invention includes a method for the adjustment of the longitudinal position and of the force already described along with the characteristics of the tailstock.

In the embodiment of figures 1 and 2, the tailstock has means for the transversal positioning of the tailstock which include an intermediate flexible part 4 between the base 1 and the body 2, a threaded shaft 20 coupled to a first nut 13 fixed to the body 2, and a second nut 14 fixed to the base 1. The threads of both nuts 13 and 14 have different pitches, and the centring point 7 is aligned by the rotation of that threaded shaft 20. This rotation is performed by means of a motor 21 governed by the numeric control 12. Said numeric control 12 knows the transversal position of the piece to be machined, by means of measuring devices (not shown in the figures) which operate on said piece.

When the threaded shaft 20 turns, the centring point 7 is displaced according to an arc whose centre would be in the centre of the flexible part 4.

The tailstock also includes springs 15 housed in the base 1, by means of which the body 2 is pre-loaded.

## Claims

1. A tailstock with automatic control of position and force, comprising a body (2), a spindle (3) that is longitudinally displaceable in relation to said body (2), and a centring point (7) at the end of said spindle (3) for fixing a piece to be machined, said tailstock being governed by a numeric control (12), **characterised in that** further comprises a pre-loaded spring (8) housed longitudinally inside the spindle (3), means (18,19) that act on said spring (8), a shaft (6) whose rotation displaces said means (18,19) longitudinally, a linear encoder (10) for detecting the position of spindle (3) and a rotary encoder (11) for detecting the rotation of shaft (6), wherein the numeric control (12), by means of the signals received from the linear encoder (10) and the rotary encoder (11), carries out a double control of the position of spindle (3) during the approach of said spindle (3) to the piece and controls the tightening force of the centring point (7) against said piece.

2. A tailstock with automatic control of position and force according to claim 1, **characterised in that** further comprises a pressure sensor (16) for determining the force exercised by the spring (8), so that the numeric control (12), by means of the signal received from the pressure sensor (16) and the signals received from the linear encoder (10) and the rotary encoder (11), carries out a double control of the tightening force against the piece.

3. A tailstock with automatic control of position and force according to any of the preceding claims, **characterised in that** the means (18,19) that act on the spring (8) comprise a nut(18) retained in rotation and threaded on a threaded shaft (9) connected by means of an elastic coupling (17) to the shaft (6), and a bushing (19) attached to said nut (18) and facing spring (8).

4. A tailstock with automatic control of position and force according to any of the preceding claims, **characterised in that** further comprises a base (1), the body (2) being linked to said base (1), and means for the transversal positioning of the centring point (7), said means including an intermediate flexible part (4) between the base (1) and the body (2), a threaded shaft (20) coupled to a first nut (13) fixed to the body (2) and to a second nut (14) coupled to the base (1), both nuts (13, 14) having different thread pitches, the centring point (7) being aligned by means of the rotation of said threaded shaft (20).

5. A tailstock with automatic control of position and force according to claim 4, **characterised in that** the rotation of the threaded shaft (20) is carried out by a motor (21) governed by the numeric control (12).

6. A tailstock with automatic control of position and force according to claims 4 or 5, **characterised in that** further comprises springs (15) housed in the base (1) by which the body (2) is pre-loaded.

7. A method for the adjustment of the longitudinal position and the force of a tailstock by means of a numeric control (12), said tailstock comprising a body (2), a spindle (3) longitudinally displaceable in relation to said body (2), and a centring point (7) at the end of said spindle (3) for fixing a piece to be machined, a pre-loaded spring (8) housed longitudinally inside the spindle (3), said spring (8) having a determined constant K, means (18,19) that act on said spring (8), and a shaft (6) whose rotation displaces said means (18,19) longitudinally, **characterised in that** the numeric control (12) monitors the position of spindle (3) and the rotation of shaft (6), and the method comprises the steps of:
- approach of spindle (3) to the piece to be machined;
- detection of the contact of the centring point (7) with the piece comparing the signal relative to the position of spindle (3) and the signal relative to the rotation of shaft (6);
- verification of the position of the tailstock, comparing the real position obtained with the theoretical position it should be in, generating an error signal if that is not the case; and
- control of the force exercised against the piece, the numeric control (12) making the means (18,19) press against the spring (8), determining the displacement to be applied to the means (18,19) according to the theoretical force to be exercised and the constant K of the spring (8).

8. The method for the adjustment of the longitudinal position and the force of a tailstock according to claim 7, **characterised in that,** in the step of control of the force exercised against the piece, the deviation in the force applied against the piece is determined comparing the real force exercised by means of a pressure sensor (16) with the theoretical force which should be applied, so that
- if the deviation in the force exercised is zero, the process of adjustment has concluded;
- if the deviation in the force exercised is within a pre-established range, a complementary adjustment of the force exercised is made by displacing the means(18,19), until the force measured by the pressure sensor (16) reaches the theoretical force to be exercised, thus ending the process of adjustment; and
- if the deviation in the force exercised is outside said pre-established range, an error signal is generated.
